# EUROPÄISCHE PATENTANMELDUNG

(11) **EP 1 202 385 A2**
(43) Veröffentlichungstag der Anmeldung: **02.05.2002**
(21) Anmeldenummer: 01124985.1
(22) Anmeldetag: 19.10.2001
(51) Int. Cl.: H01Q 7/00, H01Q 9/26, H01Q 1/22, G06K 19/077, H03H 2/00

(54) **Antennenstruktur für Transponder**

(30) Priorität: 25.10.2000 DE 10052911
(71) Anmelder: FlexChip AG, 80686 München (DE)
(72) Erfinder: Plettner, Andreas, Dr., 82340 Feldkirchen (DE)
(74) Vertreter: Grünecker, Kinkeldey, Stockmair & Schwanhäusser Anwaltssozietät

(57) **Zusammenfassung**

Transponder enthaltend einen Chip und ein Koppelelement, die elektrisch leitend miteinander verbunden sind, wobei das Koppelelement derart ausgebildet ist, dass wahlweise ein induktive oder eine kapazitive Ankopplung des Transponders an eine externe Lese-/Schreibeinrichtung ermöglicht wird, um eine uni- oder bidirektionale Datenübertragung zwischen Chip und Lese-/Schreibeinrichtung zu ermöglichen.

## Beschreibung

Die vorliegende Erfindung bezieht sich auf einen Transponder, enthaltend einen Chip und ein Koppelelement, gemäß dem Oberbegriff des Patentanspruchs 1, sowie auf eine Antennenstruktur für Transponder gemäß dem Patentanspruch 18.

In den letzten Jahren werden verstärkt RFID-Systeme zur Identifikation von beliebigen Objekten verwendet. Der Term RFID steht hierbei für Radio-Frequency-Identification und bezeichnet eine Identifikation mittels Radiowellen. Ein RFID-System besteht immer aus zwei Komponenten: einem Auswertegerät, das als Lese- und/oder Schreib-Einheit ausgebildet sein kann, und einem Transponder, der die zur Identifikation verwendeten Daten trägt.

Derzeitig gefertigte Transponder umfassen einen kleinflächigen Chip und ein Koppelelement. Die am weitesten verbreitete Anwendung von Transpondern sind kontaktlose Chip-Karten, die heutzutage überwiegend als Zahlungsmittel in Form von Scheck-Karten, oder als Zugangskontrollmittel in Form von Zugangstickets oder Firmenausweisen verwendet werden, wobei in einer Speichereinrichtung des Chips entsprechende Identifizierungsdaten gespeichert sind. Kontaktlose Chip-Karten gestatten eine einfache Handhabung, sind robust ausgestaltet und weisen somit eine geringe Störanfälligkeit auf, und bieten eine Reihe interessanter Möglichkeiten in der Anwendung.

Die Fortschritte in der Siliciumtechnik ermöglichen extrem energiearme, passive Transponder. Insbesondere sind Transponder realisierbar, die aus einem Hochfrequenzfeld (HF-Feld) Energie beziehen und damit Daten speichern und mittels einer Dämpfungsmodulation zurücksenden. Bei einer derartigen Datenübertragung ist aus prinzipiellen elektrotechnischen Gründen die Übertragungsbandbreite auf einen Bruchteil einer Trägerfrequenz beschränkt, wobei derzeit Datenraten von annähernd 58 Kbit realisiert werden. Weitere Entwicklungen im Bereich der Chip-Technik werden voraussichtlich zu Chips führen, die bei ca. 1 mm² Chipfläche eine Datenmenge von ungefähr 1 Mbit speichern können. Das Auslesen einer derartigen Datenmenge dauert bei den derzeit realisierten Bitraten ca. 18 Sekunden.

Um diese Datenraten zu erhöhen, muss zu höheren Trägerfrequenzen übergegangen werden, was durch Weiterentwicklungen im Chip-Bereich, insbesondere in der CMOS-Technik ermöglicht wird, da Schaltungen mit Taktzeiten von 1 GHz und höher, auch aufgrund der ständig verkleinerten Strukturen, möglich sind.

Das Koppelelement gebräuchlicher Transponder wird entweder als Leiterschleife für eine überwiegend induktive Kopplung, oder als Dipol für eine überwiegend kapazitive Kopplung ausgebildet. Die induktive Kopplung bietet den Vorteil, in Resonanz betrieben werden zu können. Hierzu wird die Leiterschleife mit einer Kapazität zu einem Schwingkreis verschaltet, der auf die Arbeitsfrequenz der kontaktlosen Chip-Karte abgestimmt ist und mit einer Spule des Auswertegeräts einen locker gekoppelten Transformator bildet.

Die Herstellung von extrem dünnen Chips, die mit ebenfalls dünnen Leiterspulen verbunden werden, ermöglicht das Ausbilden induktiver Transponder als sogenannte "Smart Label", die über eine Distanz von einigen Zentimetern bis hin zu einigen Metern Daten mit einem Auswertegerät austauschen können. Hierbei werden die Smart Label in der Regel im Frequenzbereich von einigen MHz betrieben, üblicherweise bei der freigegebenen Frequenz von 13,56 MHz. Da das Smart Label die zum Betrieb benötigte Energie über die Leiterschleife kontaktlos von dem Auswertegerät empfängt, so dass das Smart Label nicht über eine eigene Spannungsquelle verfügen muss und sich insbesondere außerhalb des Wirkungsbereichs des Auswertegeräts völlig passiv verhält, wird bei niedrigeren Frequenzen die benötigte Windungszahl der Leiterschleife zu hoch und bei höheren Frequenzen werden die Induktivitäten zu gering, um eine Leiterschleife mit ausreichender Güte zu realisieren.

Somit weisen induktive RFID-Transponder den Nachteil auf, dass nur geringe Datenraten realisierbar sind, was zu verhältnismäßig langen Auslesezeiten führt.

Die kapazitive Kopplung eignet sich in aller Regel nur für geringe Abstände des Transponders von einem Auswertegerät, üblicherweise im Millimeter- bis geringen Zentimeterbereich, da ansonsten bei realistischen Koppelkapazitäten hohe Spannungen erforderlich wären. Hierbei wird eine Kommunikation zwischen dem Transponder und dem Auswertegerät über Koppelflächen bewirkt, die in die unmittelbare Nähe des Auswertegeräts gebracht werden zur Energie- und Datenübertragung. Die Ankopplung eines kapazitiven Transponders an ein Auswertegerät ist um so intensiver, je höher die verwendete Betriebsfrequenz ist. Eine höhere Trägerfrequenz ist ebenfalls hilfreich für den Fall, dass höhere Datenübertragungsraten erforderlich sind.

Allerdings weisen kapazitive RFID-Transponder den Nachteil auf, dass zur Energie- und Datenübertragung ein Quasikontakt zwischen dem kapazitiven RFID-Transponder und dem Auswertegerät notwendig ist.

Ausgehend von dem bekannten Stand der Technik und obenstehenden Nachteilen liegt der vorliegenden Erfindung die Aufgabe zugrunde, eine Möglichkeit zu schaffen, das Auslesen von Daten aus einem Transponder effektiver zu gestalten.

Diese Aufgabe wird durch die Gegenstände der Patentansprüche 1 und 18 gelöst. Bevorzugte Ausgestaltungen der Erfindung sind Gegenstand der Unteransprüche.

Gemäß einem besonderen Aspekt der vorliegenden Erfindung werden Transponder bereitgestellt, die einen Chip und ein Koppelelement enthalten, die elektrisch leitend miteinander verbunden sind, wobei das Koppelelement derart ausgebildet ist, dass wahlweise eine induktive oder eine kapazitive Ankopplung des Transponders an eine externe Lese-/Schreibeinrichtung ermöglicht wird, um eine uni- oder bidirektionale Datenübertragung zwischen Chip und Lese-/Schreibeinrichtung zu ermöglichen.

Das Koppelelement wird derart ausgebildet, dass die induktive Ankopplung des Transponders für Frequenzen durchführbar ist, die kleiner als 200 MHz sind und dass die kapazitive Ankopplung des Transponders für Frequenzen durchführbar ist, die größer als 200 MHz sind. Bevorzugterweise werden zur induktiven Ankopplung die Frequenzen 13,56 MHz, 27,12 MHz oder 40,68 MHz verwendet. Zur kapazitiven Ankopplung werden vorzugsweise die Frequenzen 433 MHz, 868 MHz, 915 MHz, 2,45 GHz oder 5,8 GHz verwendet.

Ein Vorteil des erfindungsgemäßen Transponders besteht darin, dass dieser einerseits bei einer niedrigen Frequenz, d.h. bei einer Frequenz <200 MHz, wie ein induktiver Transponder betrieben werden kann, wobei der Transponder die bekannten Vorzüge des induktiven RFID-Systems aufweist, d.h. Betrieb nahe der Resonanz, Reichweite im Dezimeter-Bereich bei den erlaubten Feldstärken sowie vergleichsweise geringe Abschirmbarkeit. Derselbe Transponder kann durch die erfindungsgemäße Auslegung der Antenne bei einer Frequenz >200 MHz kapazitiv betrieben werden, d.h. abseits einer Resonanz bei vorzugsweise deutlich höheren Frequenzen und somit effektiverer Ankopplung zu einer externen Lese-/Schreibeinrichtung und weist hierbei die bekannten Vorteile eines kapazitiven Transponders auf.

Das erfindungsgemäße Koppelelement wird bevorzugterweise als passives LCR-Netzwerk ausgebildet, das mindestens eine Frequenzweiche enthält. Die Bauhöhe des Transponders entspricht im Wesentlichen der Bauhöhe des Chips. Das Koppelelement wird durch planare Strukturen gebildet. Der Teil des Koppelelements, der zur kapazitiven Ankopplung des Transponders an eine externe Lese-/Schreibeinrichtung dient, kann auf einander gegenüberliegenden Seiten des Transponders, beispielsweise auf einer entsprechend großflächig ausgebildeten Ober- und Unterseite, ausgebildet sein.

Der Chip des Transponders weist bevorzugterweise eine Speichereinrichtung mit mindestens zwei Speicherbereiche auf, wobei auf jeden Speicherbereich mit einer bestimmten Frequenz zugegriffen werden kann. Gemäß einer anderen Variante kann der Chip mindestens zwei verschiedene Speichereinrichtungen aufweisen, wobei auf jede Speichereinrichtung mit einer bestimmten Frequenz zugegriffen werden kann. Die Diskriminierung der Speichereinrichtungen kann beispielsweise über die bestimmte Frequenz und eine daraus abgeleitete Clock-Frequenz erreicht werden.

Ein Vorteil des Bereitstellens von einer Speichereinrichtung mit mindestens zwei Speicherbereichen bzw. mindestens zwei Speichereinrichtungen, auf die mit unterschiedlichen Frequenzen zugegriffen werden kann, besteht darin, dass aus einem Speicherbereich bzw. einer Speichereinrichtung eines Transponders, der in den Bereich eines niederfrequenten Auswertegeräts gelangt, im Rahmen einer induktiven Ankopplung bestimmte, gespeicherte Daten ausgelesen werden können. Für den Fall, dass eine größere Datenmenge aus dem zweiten Speicherbereich bzw. der zweiten Speichereinrichtung ausgelesen werden soll, kann der Transponder in Quasikontakt mit einem hochfrequenten Auswertegerät gebracht werden, so dass die Daten im Rahmen einer kapazitiven Ankopplung mit hoher Datenübertragungsrate vorzugsweise innerhalb von wenigen Millisekunden ausgelesen oder geschrieben werden können.

Gemäß einer besonders bevorzugten Ausführungsform der vorliegenden Erfindung weist das Koppelelement zwei paddelförmige Kondensatorflächen auf, die zur kapazitiven Ankopplung des Transponders an die Lese-/Schreibeinrichtung dienen. Des Weiteren weist das Koppelelement eine Leiterschleife mit einer Kapazität auf, die als Resonanzkreis wirken und zur induktiven Ankopplung des Transponders an die Lese-/Schreibeinrichtung dienen. Zwischen die Kondensatorflächen und den Resonanzkreis wird bevorzugterweise mindestens eine Trenninduktivität geschaltet, die als Frequenzweiche wirkt und beispielsweise als Leiterschleife ausgebildet ist, wobei die Ausbildung mäanderförmig oder zumindest in Form einer kreuzungsfreien Planarspule erfolgt. Die Kapazität, die mit der Leiterschleife einen Resonanzkreis bildet, kann ebenfalls eine parasitäre Kapazität sein.

Bevorzugte Ausführungsformen der vorliegenden Erfindung werden im Folgenden unter Bezugnahme auf die beiliegenden Zeichnungen näher erläutert. Dabei zeigen die Zeichnungen im Einzelnen:
- Fig. 1: eine schematische Ansicht eines erfindungsgemäßen Transponders;
- Fig. 2: ein illustratives Schaltbild des erfindungsgemäßen Transponders gemäß Fig. 1; und
- Fig. 3: eine schematische Seitenansicht einer Ausführungsvariante eines Teils des erfindungsgemäßen Koppelelements.

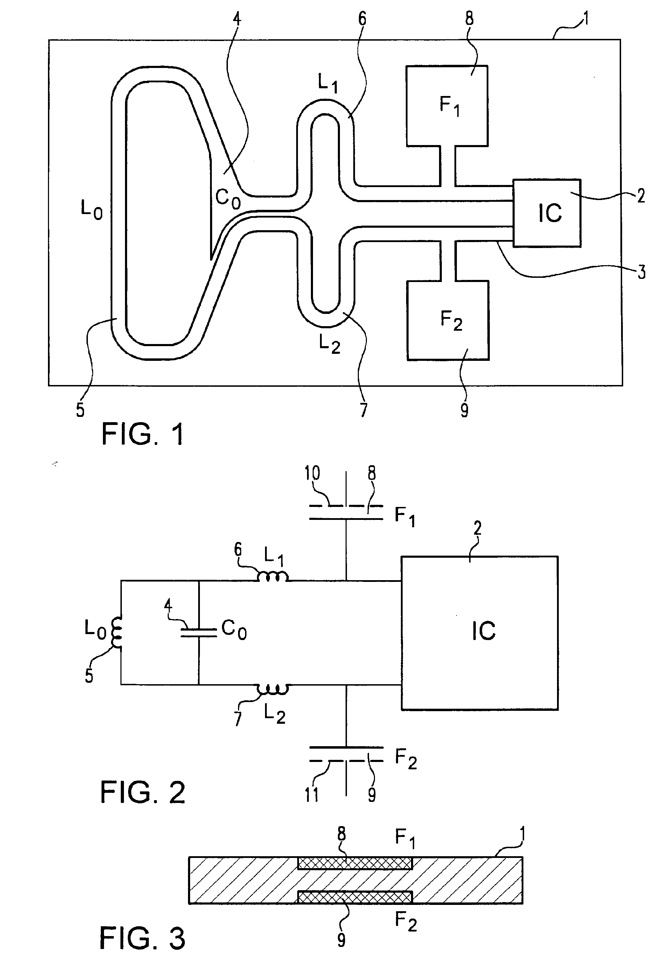

Fig. 1 zeigt eine schematische Ansicht eines Transponders 1 mit Chip 2 und Koppelelement 3, die elektrisch leitend miteinander verbunden sind. Das Koppelelement 3 weist eine Kapazität 4 sowie eine Leiterschleife 5 auf, die gemeinsam einen Resonanzkreis bilden, zwei Leiterschleifen 6, 7, die als Frequenzweiche wirken, sowie zwei paddelförmige Kondensatorflächen 8, 9.

Bei Betrieb in einem niederfrequenten HF-Feld bildet die Leiterschleife 5 mit der zusätzlichen Kapazität 4, die ebenfalls eine parasitäre Kapazität C₀ sein kann, einen Resonanzkreis, der über die beiden Leiterschleifen 6, 7 mit dem Chip 2 verbunden ist. Bei Betrieb in einem hochfrequenten HF-Feld bilden die beiden paddelförmigen Kondensatorflächen 8, 9 mit den entsprechenden Kondensatorflächen einer externen Lese-/Schreibeinrichtung Kapazitäten, wobei der hochfrequente Strom aufgrund des Serienwiderstandes der Leiterschleifen 6, 7 nicht zur Leiterschleife 5 und insbesondere nicht zur Kapazität 4 fließen kann.

Der Resonanzkreis aus Kapazität 4 und Leiterschleife 5 ist vorzugsweise derart ausgeführt, dass er bei Frequenzen <200 MHz betrieben werden kann, insbesondere bei den Frequenzen 13,56 MHz, 27,12 MHz oder 40,68 MHz, wobei eine Datenübertragung durch Lastmodulation erfolgt.

Die Kondensatorflächen 8, 9 sind vorzugsweise derart ausgebildet, dass der Transponder kapazitiv bei Frequenzen >200 MHz betrieben werden kann, insbesondere bei den Frequenzen 433 MHz, 868 MHz, 915 MHz, 2,45 GHz oder 5,8 GHz. Zum Betrieb bei diesen Frequenzen müssen die Kondensatorflächen 8, 9 nicht notwendigerweise großflächig ausgebildet werden, und bereits wenige mm² Fläche sind ausreichend, um in einem Quasikontakt, d.h. einem Abstand von 0,1 bis 0,5 mm, eine ausreichende Energiekopplung des Transponders mit einer externen Lese-/Schreibeinrichtung zu erzielen. Die Datenübertragung erfolgt wiederum durch Lastmodulation.

Die Trenninduktivitäten 6, 7 liegen bei den vorgegebenen Frequenzen vorzugsweise im Bereich von ungefähr 20 nH und können jeweils durch eine Leiterschleife von 10 bis 20 mm Länge ausgebildet werden.

Bevorzugterweise wird das Koppelelement durch planare Strukturen gebildet, so dass die Bauhöhe des Transponders 1 im Wesentlichen durch die Bauhöhe des Chips 2 bestimmt wird.

Ein Vorteil einer derart flachen Ausgestaltung des erfindungsgemäßen Transponders 1 liegt darin, dass der Transponder 1 für Anwendungen geeignet ist, in denen das Vorhandensein des Transponders 1 vorzugsweise nicht wahrnehmbar sein soll, beispielsweise bei einer sogenannten CIP (Chip-in-Papier)-Anwendung oder einer sogenannten CIF (Chip-in-Foto)-Anwendung, wobei der Transponder in normales Papier bzw. Fotopapier eingebracht wird, um Informationen hinsichtlich eines bestimmten Dokuments oder eines Fotos bereitzustellen. Beispielsweise kann auf dem Chip 2 in einer CIF-Anwendung grafische Information gespeichert werden, die Daten repräsentiert, die das entsprechende Foto darstellen.

Der Chip 2 wird bevorzugterweise derart ausgeführt, dass er eine Speichereinrichtung mit mindestens zwei Speicherbereichen aufweist, wobei auf jeden Speicherbereich mit einer bestimmten Frequenz zugegriffen werden kann. Gemäß einer anderen Variante kann der Chip 2 mindestens zwei Speichereinrichtungen aufweisen, wobei auf jede Speichereinrichtung mit einer bestimmten Frequenz zugegriffen werden kann. Die Diskriminierung der beiden Speichereinrichtungen erfolgt vorzugsweise anhand der bestimmten Frequenz sowie einer daraus abgeleiteten Clock-Frequenz.

Ein Vorteil des erfindungsgemäßen Transponders 1 besteht darin, dass er sowohl induktiv, als auch kapazitiv betrieben werden kann und somit sowohl die Vorteile eines gebräuchlichen induktiven Transponders, als auch die Vorteile eines gebräuchlichen kapazitiven Transponders aufweist. Insbesondere erfolgt die Ankopplung an ein niederfrequentes oder ein hochfrequentes Auswertegerät vorzugsweise automatisch und somit für einen Benutzer transparent. Des Weiteren kann das Auswertegerät in Bezug auf eine auszulesende Datenmenge ausgewählt werden.

Fig. 2 zeigt ein illustratives Schaltbild des erfindungsgemäßen Transponders gemäß Fig. 1. Das Koppelelement, das mit dem Chip 2 verbunden ist, umfasst eine Kapazität 4, Spulen 5, 6, 7 und Kondensatorflächen 8, 9. Die Kondensatorflächen 8, 9 müssen in Quasikontakt mit Kondensatorflächen 10, 11 einer Lese-/Schreibeinrichtung bzw. eines Auswertegeräts gebracht werden, um eine kapazitive Ankopplung des Transponders an das Auswertegerät zu bewirken.

Fig. 3 zeigt eine schematische Seitenansicht einer Ausführungsvariante des erfindungsgemäßen Transponders 1, indem die Kondensatorflächen 8, 9 an einander gegenüberliegenden Seiten des Transponders 1 ausgebildet sind, vorzugsweise auf der Ober- und Unterseite des Transponders 1, die in Bezug auf die anderen Seiten des Transponders 1 großflächiger ausgelegt sind.

## Patentansprüche

1. Transponder, enthaltend einen Chip (2) und ein Koppelelement (3), die elektrisch leitend miteinander verbunden sind,
**dadurch gekennzeichnet, dass**
das Koppelelement (3) derart ausgebildet ist, dass wahlweise eine induktive oder eine kapazitive Ankopplung des Transponders an eine externe Lese-/Schreibeinrichtung ermöglicht wird, um eine uni- oder bidirektionale Datenübertragung zwischen Chip (2) und Lese-/Schreibeinrichtung zu ermöglichen.

2. Transponder nach Anspruch 1, **dadurch gekennzeichnet, dass** das Koppelelement (3) für eine induktive Ankopplung des Transponders bei Frequenzen von kleiner als 200 MHz ausgeführt ist.

3. Transponder nach Anspruch 2, **dadurch gekennzeichnet, dass** die Frequenz 13,56 MHz, 27,12 MHz oder 40,68 MHz beträgt.

4. Transponder nach einem der Ansprüche 1 bis 3, **dadurch gekennzeichnet, dass** das Koppelelement (3) für eine kapazitive Ankopplung des Transponders bei Frequenzen von größer als 200 MHz ausgeführt ist.

5. Transponder nach Anspruch 4, **dadurch gekennzeichnet, dass** die Frequenz 433 MHz, 868 MHz, 915 MHz, 2,45 GHz oder 5,8 GHz beträgt.

6. Transponder nach einem der Ansprüche 1 bis 5, **dadurch gekennzeichnet, dass** das Koppelelement (3) als passives LCR-Netzwerk ausgebildet ist, das mindestens eine Frequenzweiche enthält.

7. Transponder nach einem der Ansprüche 1 bis 6, **dadurch gekennzeichnet, dass** die Bauhöhe des Transponders im Wesentlichen durch die Bauhöhe des Chips (2) bestimmt wird.

8. Transponder nach einem der Ansprüche 1 bis 7, **dadurch gekennzeichnet, dass** das Koppelelement (3) durch planare Strukturen gebildet wird.

9. Transponder nach einem der Ansprüche 1 bis 8, **dadurch gekennzeichnet, dass** ein Teil des Koppelelements (3), der zur kapazitiven Ankopplung des Transponders dient, auf einander gegenüberliegenden Seiten des Transponders ausgebildet ist.

10. Transponder nach einem der Ansprüche 1 bis 9, **dadurch gekennzeichnet, dass** der Chip (2) eine Speichereinrichtung mit mindestens zwei Speicherbereichen aufweist, wobei auf jeden Speicherbereich mit einer bestimmten Frequenz zugegriffen werden kann.

11. Transponder nach einem der Ansprüche 1 bis 9, **dadurch gekennzeichnet, dass** der Chip (2) mindestens zwei Speichereinrichtungen aufweist, wobei auf jede Speichereinrichtung mit einer bestimmten Frequenz zugegriffen werden kann.

12. Transponder nach einem der Ansprüche 1 bis 11, **dadurch gekennzeichnet, dass** das Koppelelement (3) zwei paddelförmige Kondensatorflächen (8, 9) aufweist, die zur kapazitiven Ankopplung des Transponders an die Lese-/Schreibeinrichtung dienen.

13. Transponder nach einem der Ansprüche 1 bis 12, **dadurch gekennzeichnet, dass** das Koppelelement (3) eine Leiterschleife (5) mit einer Kapazität (4) aufweist, die als Resonanzkreis wirken und zur induktiven Ankopplung des Transponders an die Lese-/Schreibeinrichtung dienen.

14. Transponder nach Anspruch 12 und 13, **dadurch gekennzeichnet, dass** das Koppelelement (3) mindestens eine Trenninduktivität (6, 7) umfasst, die als Frequenzweiche wirkt und zwischen die Kondensatorflächen (8, 9) und den Resonanzkreis geschaltet ist.

15. Transponder nach Anspruch 14, **dadurch gekennzeichnet, dass** die Trenninduktivität (6, 7) als Leiterschleife ausgebildet ist.

16. Transponder nach Anspruch 14 oder 15, **dadurch gekennzeichnet, dass** die Trenninduktivität (6, 7) mäanderförmig, zumindest aber als kreuzungsfreie Planarspule ausgebildet ist.

17. Transponder nach einem der Ansprüche 13 bis 16, **dadurch gekennzeichnet, dass** die Kapazität (4) eine parasitäre Kapazität (C₀) repräsentiert.

18. Antennenstruktur für Transponder, die aus planaren Strukturen besteht und sowohl eine induktive, als auch eine kapazitive Ankopplung des Transponders an eine externe Lese-/Schreibeinrichtung ermöglicht, umfassend:
zwei paddelförmige Kondensatorflächen (8, 9) zur kapazitiven Ankopplung des Transponders an die externe Lese-/Schreibeinrichtung,
eine Leiterschleife (5) mit einer Kapazität (4), die als Resonanzkreis wirken, zur induktiven Ankopplung des Transponders an die Lese-/Schreibeinrichtung, und
mindestens eine Trenninduktivität (6, 7), die als Leiterschleife ausgebildet ist und als Frequenzweiche wirkt und zwischen die Kondensatorflächen (8, 9) und den Resonanzkreis geschaltet ist.

19. Antennenstruktur nach Anspruch 18, **dadurch gekennzeichnet, dass** die Trenninduktivität (6, 7) mäanderförmig ausgebildet ist

20. Antennenstruktur nach Anspruch 19, **dadurch gekennzeichnet, dass** die Kapazität (4) eine parasitäre Kapazität (C₀) repräsentiert.
